# EUROPEAN PATENT APPLICATION

(11) **EP 1 843 247 A1**
(43) Date of publication of application: **10.10.2007**
(21) Application number: 06711956.0
(22) Date of filing: 19.01.2006
(51) Int. Cl.: G06F 11/18

(54) **INFORMATION PROCESSING SYSTEM AND INFORMATION PROCESSING METHOD**

(30) Priority: 25.01.2005 JP 2005016675
(71) Applicant: Yokogawa Electric Corporation, Tokyo 180-8750 (JP)
(72) Inventor: TERAYAMA, Atsushi, Tokyo, 1808750 (JP); MANIWA, Yukio, Tokyo, 1808750 (JP)
(74) Representative: Grünecker, Kinkeldey, Stockmair & Schwanhäusser Anwaltssozietät
(86) International application number: PCT/JP2006/300710
(87) International publication number: WO 2006/080227

(57) **Abstract**

An anomaly detector detects anomaly of a first device. A second device reset part, in case that anomaly has been detected by the anomaly detector, resets a second device. A first device reset part, in case that anomaly has been detected by the anomaly detector, resets a first device. Further, a collating part collates data generated by the first device with data generated by the second device, and judges anomaly when these data are in disagreement with each other. A reset part, in case that the anomaly has been judged by the collating part, resets the second device.

## Description

### Technical Field

The present invention relates to an information processing system and an information processing method which include plural devices of which each executes processing independently, and particularly to an information processing system and an information processing method which have high reliability.

### Background Art

A plant control system has been known, which manages and controls field equipments arranged in a plant. Further, such the plant installs a safety system for realizing safety of plant. The safety system is a system which, in case that an anomaly is recognized in the field equipment, sends an alarm and executes the required processing, and the safety system is installed as a part of the plant control system or installed independently of the plant control system.

Refer to JP-A-08-006673 as related art

### Disclosure of the Invention

The safety system requires very high reliability because of its intended function. For example, such a situation that the system recognizes the safety of the plant regardless of generation of anomaly, or that the system sends erroneous information must be avoided as much as possible. Further, in case that the abnormal possibility is indicated, processing on the safe side must be selected.

An object of the invention is to provide an information processing system and an information processing method which have high reliability

The invention provides an information processing system including a first device and a second device of which each executes the same processing independently, an anomaly detector which detects anomaly of the first device, and a second device reset part which resets the second device in case that the anomaly has been detected by the anomaly detector.

According to this information processing system, in case that the anomaly of the first device has been detected, the second device is reset. Therefore, without depending on diagnostic by the second device itself, the second device can be reset. The "anomaly of the first device" is not limited to anomaly caused by the first device, but includes anomaly caused by the second device. Further, the "anomaly of the first device" includes anomaly detected in the first device and operational anomaly of the first device which is detected outside the first device.

The above information processing system may include a first device reset part which resets the first device in case that the anomaly has been detected by the anomaly detector.

In this case, both of the first device and the second device are reset.

In the above information processing system, the anomaly detector may be mounted separately from the first device.

In this case, even when the anomaly is produced in the first device, the anomaly of the first device can be detected accurately.

In the above information processing system, the anomaly detector may be mounted in the first device.

In this case, the anomaly caused by the second device can be detected in the first device.

In the above information processing system, the anomaly detector may be a watchdog timer.

In this case, the operational anomaly of the first device can be detected.

The invention provides also an information processing system including a first device and a second device of which each executes the same processing independently, in which the first device includes a collating part which collates data generated by the first device with data generated by the second device and judges anomaly when these data are in disagreement with each other, and a reset part which resets the second device in case that the anomaly has been judged by the collating part.

According to this information processing system, the data generated by the first device and the data generated by the second device are collated, and in case that their data are in disagreement with each other, the second device is reset. Therefore, in case that anomaly is produced in the second device, these data are not in agreement with each other, so that the second device is reset.

The invention provides also an information processing system including a first device and a second device of which each executes the same processing independently, in which the second device includes a second device reset part which resets the second device in case that the reset part has detected anomaly of the second device, and the first device includes an anomaly recognition part which recognizes anomaly of the second device, and an informative part which informs the anomaly of the second device recognized by the anomaly recognition part.

According to this information processing system, in case that the anomaly of the second device has been detected, the second device is reset. Therefore, malfunction caused by the anomaly of the second device can be prevented. Further, the anomaly of the second device recognized by the anomaly recognition part can be informed. The informative part may be installed in the second device.

In the above information processing system, the second device may include a first device reset part which resets the first device in case that the reset part has detected anomaly of the first device.

In this case, in case that the anomaly of the first device has been detected, since the first device is reset, malfunction caused by the first device can be prevented.

In the above information processing system, the first device and the second device may be separate semiconductor devices.

In the above information processing system, the first device and the second device may be separate CPU's.

The invention provides also an information processing method using a first device and a second device of which each executes the same processing independently, which comprises a step of detecting anomaly of the first device, and a step of resetting the second device in case that the anomaly of the first device has been detected.

According to this information processing method, in case that the anomaly of the first device has been detected, the second device is reset. Therefore, without depending on diagnostic by the second device itself, the second device can be reset. The "anomaly of the first device" is not limited to anomaly caused by the first device, but includes anomaly caused by the second device. Further, the "anomaly of the first device" includes anomaly detected in the first device and operational anomaly of the first device which is detected outside the first device.

The above information processing method may include a step of resetting the first device in case that the anomaly of the first device has been detected.

In this case, both of the first device and the second device are reset.

### Effect of Invention

According to the above information processing system and the above information processing method, in case that the anomaly of either device has been detected, the other device is reset. Therefore, without depending on diagnostic by the other device itself, the other device can be reset.

### Brief Description of the Drawings

[Figs. 1(a), 1(b), 1(c)] They are block diagrams showing an information processing system of the invention functionally.
[Fig. 2] It is a block diagram showing the constitution of a safety system to which an information processing system in a first embodiment is applied.
[Fig. 3] It is a block diagram showing partially the constitution of the information processing system in the first embodiment.
[Fig. 4] It is a block diagram showing a reset procedure in the information processing system in the first embodiment.
[Fig. 5] It is a block diagram showing partially the constitution of an information processing system in a second embodiment.
[Fig. 6] It is a block diagram showing partially the constitution of an information processing system in a third embodiment.
[Fig. 7] It is a block diagram showing a reset procedure in the information processing system in a fourth embodiment.
[Fig. 8] It is a block diagram showing partially the constitution of an information processing system in a fifth embodiment.
   - 101: Anomaly detector
   - 102: Second device reset part
   - 103: First device reset part
   - 111: Collating part
   - 112: Reset part
   - 121: Second device reset part
   - 122: Anomaly recognition part
   - 123: Informative part
   - 124: First device reset part

### Best Mode for Carrying Out the Invention

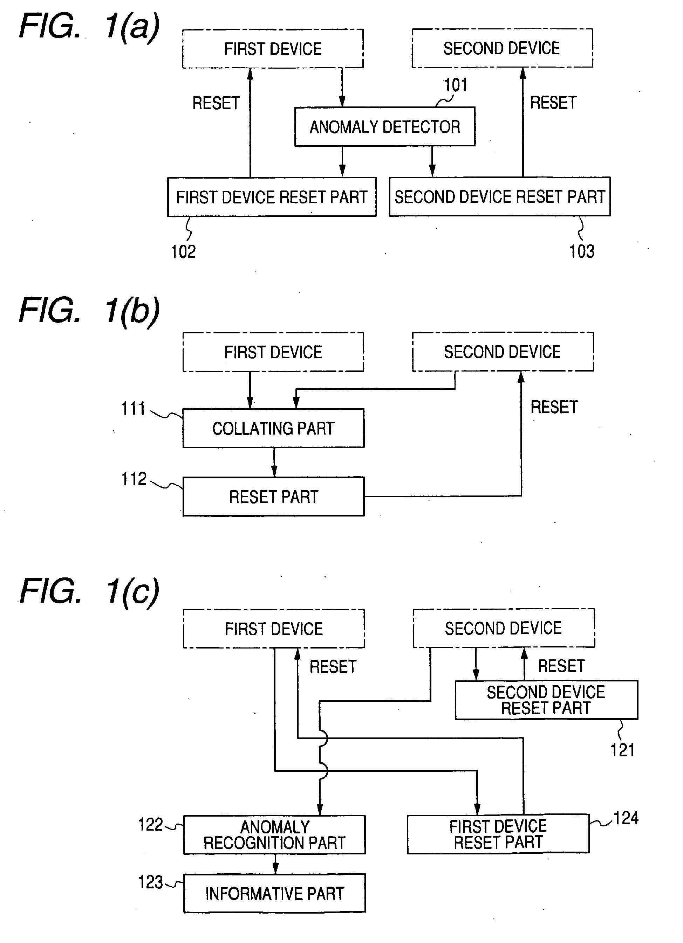

Figs. 1(a), 1(b), and 1(c) are block diagrams showing an information processing system of the invention functionally.

In the mode shown in Fig. 1(a), each of a first device and a second device executes the same processing independently. An anomaly detector 101 detects anomaly of the first device. A second device reset part 102 resets the second device in case that the anomaly detector 101 has detected the anomaly.

Further, a first device reset part 103 resets the first device in case that the anomaly detector 101 has detected the anomaly.

In the mode shown in Fig. 1(b), each of a first device and a second device executes the same processing independently. A collating part 111 collates the data generated by the first device with the data generated by the second device, and judges anomaly in case that these data are in disagreement with each other. A reset part 112 resets the second device in case that the collating part 111 has judged the anomaly.

In the mode shown in Fig. 1(c), each of a first device and a second device executes the same processing independently. A second device reset part 121 resets the second device in case that it has detected the anomaly of the second device. An anomaly recognition part 122 recognizes the anomaly of the second device in the first device. An informative part 123 informs the anomaly of the second device recognized by the anomaly recognition part 122.

A first device reset part 124 resets the first device in case that it has detected the anomaly of the first device in the second device.

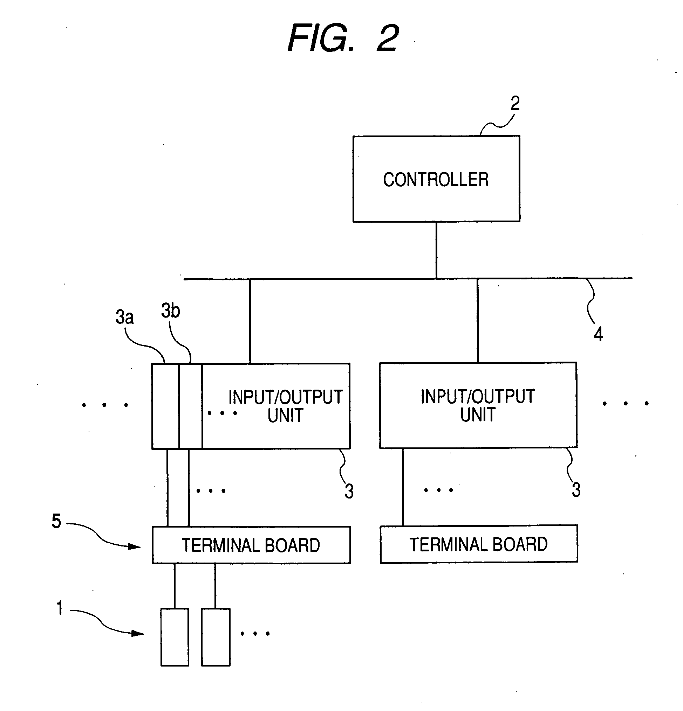

Referring to Figs. 2 to 8, first to fifth embodiments of the information processing system according to the invention will be described below.

### Embodiment 1

Fig. 2 is a block diagram showing the constitution of a safety system to which an information processing system in a first embodiment is applied. This safety system is configured as a part of a plant control system.

As shown in Fig. 2, the plant control system includes a controller 2 which manages and controls unificly field equipments 1, 1, ... such as electromagnetic valves or sensors which are arranged in respective portion of the plant, and input/output devices 3, 3, ... interposed between the controller 2 and the field equipment 1. The input/output devices 3, 3, ... are connected through a network to the controller 2. Further, the field equipments 1, 1, ... are connected through a terminal board 5 to the input/output device 3.

As shown in Fig. 2, on the input/output device 3, input/output units 3a, 3b, ... which execute interface processing between the field equipment 1 and the controller 2 are mounted. As described later, each of these input/output units 3a, 3b, ... , for purpose of improvement in reliability, executes the same processing independently.

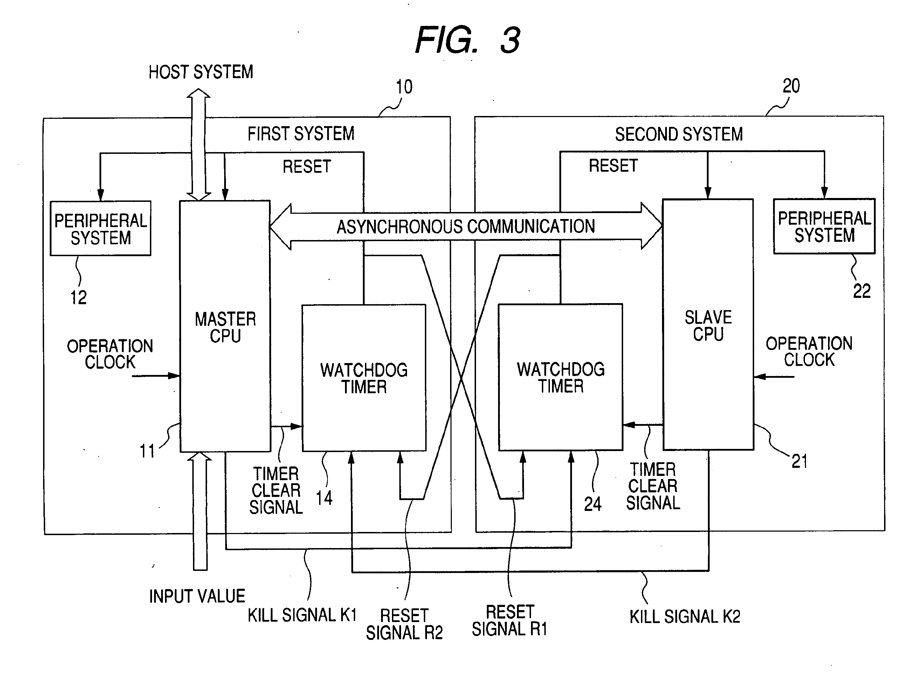

Fig. 3 is a block diagram showing a part of the constitution of the input/output unit 3a. Fig. 3 shows an example of a unit which processes an input value inputted from the field equipment 1 side and outputs data toward a host system (controller 2 side system).

As shown in Fig. 3, this unit includes a first system 10 and a second system 20. The first system 10 and the second system 20 include respectively a master CPU 11 and a slave CPU 21 which operate by separate operation clocks. Each of the master CPU 11 and the slave CPU 21 executes the same processing independently. Further, on the first system 10 and the second system 20, a peripheral circuit 12 and a peripheral circuit 22 are mounted respectively.

As shown in Fig. 3, the input value from the field equipment 1 is inputted into the master CPU 11. The master CPU 11 executes arithmetic processing on the basis of the input value, and generates data of data format which is usable in the host system. The master CPU 11 is in charge of communication with the host system, and the data generated by the master CPU 11 is output toward the host system.

Each of the master CPU 11 and the slave CPU 21 executes communication by asynchronous communication (UART). The master CPU 11 and the slave CPU 21 exchange a command and a response for each predetermined processing phase by means of the asynchronous communication, whereby their operations are synchronized with each other.

Further, through the asynchronous communication, the input value from the field equipment 1 is transmitted to the slave CPU 21, and the slave CPU 21 executes the same arithmetic processing as the arithmetic processing by the master CPU 11.

Further, between the master CPU 11 and the slave CPU 21, the data generated by their processing are exchanged, and the respective CPU's collates these data. In case that disagreement between the data has been detected, it is judged that anomaly is produced in any processing, and processing described later is executed. The data collating will be described in detail also in a fifth embodiment.

As shown in Fig. 3, the first system 10 installs a watchdog timer (WDT) 14 which monitors the master CPU 11, and the second system 20 installs a watchdog timer (WDT) 24 which monitors the slave CPU 21.

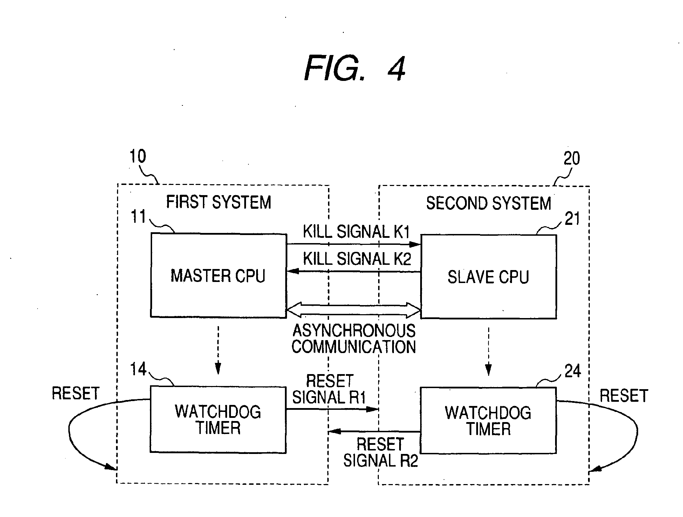

Fig. 4 is a block diagram showing a reset procedure in the unit shown in Fig. 3.

As shown in Figs. 3 and 4, the watchdog timer 14 counts a reception interval of a timer clear signal from the master CPU 11. In case that the timer clear signal is not received for a fixed time, that is, in case that operational anomaly of the master CPU 11 has been detected, the watchdog timer 14 resets the master CPU 11 and the peripheral circuit 12. Further, in this unit, in case that the operational anomaly of the master CPU 11 has been detected by the watchdog timer 14, a reset signal R1 outputted from the watchdog timer 14 is given to the watchdog timer 24 in the second system 20. Therefore, by the control of the watchdog timer 24, the slave CPU 21 and the peripheral circuit 22 are reset.

The watchdog timer 24 counts a reception interval of a timer clear signal from the slave CPU 21. In case that the timer clear signal is not received for a fixed time, that is, in case that operational anomaly of the slave CPU 21 has been detected, the watchdog timer 24 resets the slave CPU 21 and the peripheral circuit 22. Further, in case that the operational anomaly of the slave CPU 21 has been detected by the watchdog timer 24, a reset signal R2 outputted from the watchdog timer 24 is given to the watchdog timer 14 in the first system 10. Therefore, by the control of the watchdog timer 14, the master CPU 11 and the peripheral circuit 12 are reset.

Thus, in case that the watchdog timer 14 or the watchdog timer 24 has detected the anomaly in either CPU, not only its own system (first system or second system) but also the other system is reset, so that the entire systems are reset.

Further, in case that the anomaly has been detected in the master CPU 11, the master CPU 11 outputs a KILL signal K1 to the watchdog timer 24. In this case, by the control of the watchdog timer 24, the slave CPU 21 and the peripheral circuit 22 are reset. Namely, the second system 20 enters the reset state. Further, by the reset signal R2 outputted from the watchdog timer 24, the first system 10 itself also enters the reset state. The anomaly detected in the master CPU 11 includes anomaly of the asynchronous communication between the CPU's and processing anomaly detected since the data generated by the both CPU' s are in disagreement with each other. The detected anomaly is not limited to anomaly caused by the first system 10 but includes also anomaly caused by the second system 20.

In case that the anomaly has been detected in the slave CPU 21, the slave CPU 21 outputs a KILL signal K2 to the watchdog timer 14. In this case, by the control of the watchdog timer 14, the master CPU 11 and the peripheral circuit 12 are reset. Namely, the first system 10 enters the reset state. Further, by the reset signal R1 outputted from the watchdog timer 14, the second system 20 itself also enters the reset state. The anomaly detected in the slave CPU 21 includes anomaly of the asynchronous communication between the CPU's and processing anomaly detected since the data generated by the both CPU's are in disagreement with each other. The detected anomaly is not limited to anomaly caused by the second system 20 but includes also anomaly caused by the first system 10.

Thus, in case that any anomaly has been detected in either CPU, the other system (first system or second system) is reset. The reset by this procedure, in case that the anomaly is not detected by the watchdog timer 14 or the watchdog timer 24, works effectively.

In case that the anomaly is not detected after the reset release, the first system 10 and the second system 20 return to the normal state simultaneously.

As described above, in the first embodiment, in case that the anomaly has been detected in either of the first system 10 and the second system 20, the entire systems are reset, and there is no fear that the erroneous information is output to the host system. Therefore, precise failsafe can be executed in the entire systems. Further, since the entire systems are released from the reset state, the normal initialization after the release of reset can be realized.

Generally, there is no guarantee that the CPU itself in which the anomaly is produced can detect its anomaly correctly. However, in the first embodiment, each CPU detects the anomaly of the other CPU, and resets the other CPU. Therefore, without depending on diagnostic by the CPU itself in which the anomaly is generated, the generation of anomaly can be surely detected. Accordingly, reliability of processing in the fail time can be improved.

Further, since the constitution in which the two systems detect their abnormalities mutually is adopted, without adding a special constitution for anomaly detection, accuracy of anomaly detection can be heightened greatly at low cost. Further, since the asynchronous communication (UART) is used in communication between the CPU' s, even in case that insulation between the CPU' s is required, the system can be configured at low cost.

### Second embodiment

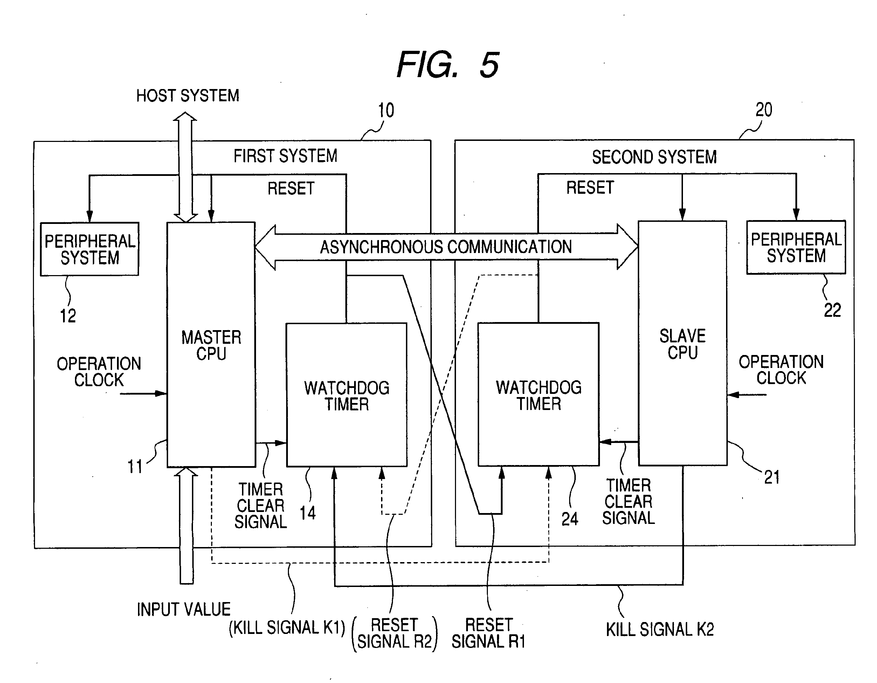

Fig. 5 shows a block diagram showing a part of the constitution of an input/output unit to which an information processing system in a second embodiment is applied. Similarly to the first embodiment, the second embodiment shows an example of a unit which processes an input value inputted from a field equipment 1 side and outputs data toward a host system (controller 2 side system).

In the example of second embodiment, the KILL signal K1 and the reset signal R2 described in the first embodiment are omitted.

Such the constitution is applied to a case where it is thought that: when a first system 10 which is a master side system detects anomaly of a second system 20 which is a slave side system, it is enough, without resetting the entire systems, that the first system 10 can notify a host system of the anomaly of the second system 20.

In the second embodiment, in case that a watchdog timer 24 has detected occurrence of anomaly of the second system 20, only the second system 20 is reset but the first system 10 is not reset. Therefore, processing using the first system 10 can be continued, and the notification for the host system is permitted. In this case, in a master CPU 10, as a result of data collation by means of asynchronous communication between the CPU's, disagreement of the data between the both CPU's is produced, so that the master CPU 10 can recognize the anomaly of the slave CPU 20. Further, the anomaly of the slave CPU 20 may be recognized by other methods than the data collating method. The master CPU 10 may recognize the anomaly of the slave CPU 20 by means of the asynchronous communication, or may acquire information that the slave CPU 20 is abnormal through another path than the asynchronous communication.

Also in the second embodiment, in case that the anomaly is produced in the first system 10, the anomaly detection by the watchdog timer 14 or the anomaly detection by the second system 20 works effectively. In this case, the entire systems including the first system 10 are reset, and there is no fear that erroneous information is output to the host system. Accordingly, similarly to the case in the first embodiment, the precise failsafe can be executed in the entire systems.

### Third embodiment

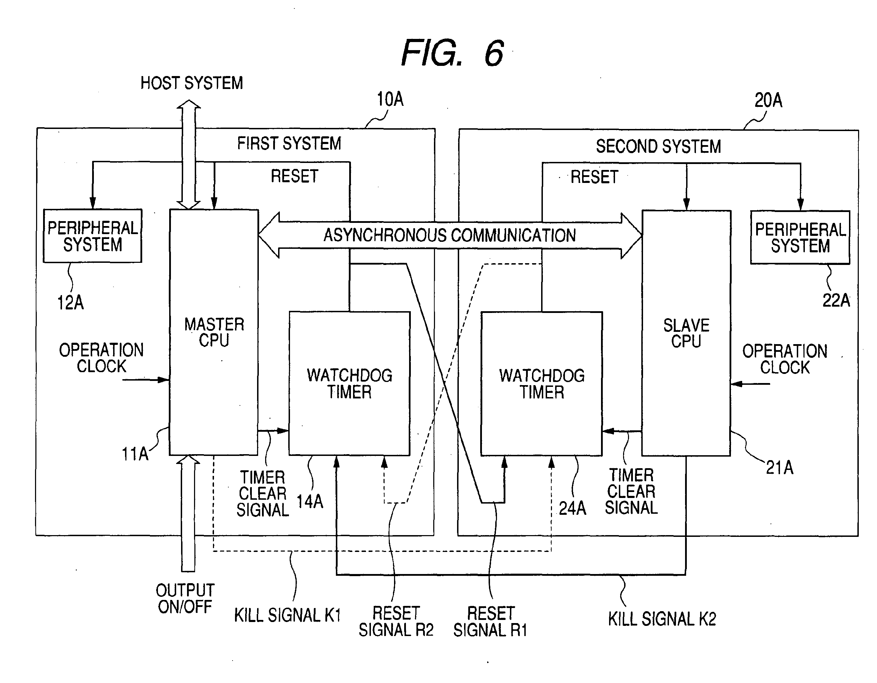

Fig. 6 shows a block diagram showing a part of the constitution of an input/output unit to which an information processing system in a third embodiment is applied. The third embodiment shows an example of a unit which processes information from a host system (controller 2 side system) and outputs data to a field equipment 1 side.

As shown in Fig. 6, this unit includes a first system 10A and a second system 20A. The first system 10A and the second system 20A include respectively a master CPU 11A and a slave CPU 21A which operate by separate operation clocks. Each of the master CPU 11A and the slave CPU 21A executes the same processing independently. Further, on the first system 10A and the second system 20A, a peripheral circuit 12A and a peripheral circuit 22A are mounted respectively.

As shown in Fig. 6, the master CPU 11A is in charge of communication with the host system, and the information from the controller 2 side is input into the master CPU 11A. The master CPU 11A executes arithmetic processing on the basis of the information from the controller 2 side, and generates data of data format which is usable in the field equipment 1.

The master CPU 11A and the slave CPU 21A execute mutual communication by asynchronous communication (UART). The master CPU 11A and the slave CPU 21A exchange a command and a response for each predetermined processing phase by means of the asynchronous communication, whereby their operations are synchronized with each other.

Further, through the asynchronous communication, the information from the controller 2 side is transmitted to the slave CPU 21A, and the slave CPU 21A executes the same arithmetic processing as the arithmetic processing by the master CPU 11A.

Further, between the master CPU 11A and the slave CPU 21A, the data generated by their processing are exchanged, and the respective CPU's collate these data. In case that disagreement between the data has been detected, it is judged that anomaly is produced in any processing, and processing described later is executed.

As shown in Fig. 6, the first system 10A installs a watchdog timer (WDT) 14A which monitors the master CPU 11A, and the second system 20A installs a watchdog timer (WDT) 24A which monitors the slave CPU 21A.

As shown in Fig. 6, the watchdog timer 14A rests the master CPU 11A and the peripheral circuit 12A in case that the operational anomaly of the master CPU 11A has been detected. Further, in case that the operational anomaly of the master CPU 11A has been detected by the watchdog timer 14A, a reset signal R1 outputted from the watchdog timer 14A is given to the watchdog timer 24A in the second system 20A. Therefore, by the control of the watchdog timer 24A, the slave CPU 21A and the peripheral circuit 22A are reset.

The watchdog timer 24A resets the slave CPU 21A and the peripheral circuit 22A in case that operational anomaly of the slave CPU 21A has been detected. Further, in case that the operational anomaly of the slave CPU 21A has been detected by the watchdog timer 24A, a reset signal R2 outputted from the watchdog timer 24A is given to the watchdog timer 14A of the first system 10A. Therefore, by the control of the watchdog timer 14A, the master CPU 11A and the peripheral circuit 12A are reset.

Thus, in case that the watchdog timer 14A or the watchdog timer 24A has detected the anomaly in either CPU, the entire systems are reset.

Further, in case that the anomaly has been detected in the master CPU 11A, the master CPU 11A outputs a KILL signal K1 to the watchdog timer 24A. In this case, by the control of the watchdog timer 24A, the second system 20A enters the reset state. Further, by the reset signal R2 outputted from the watchdog timer 24A, the first system 10 itself also enter the reset state.

In case that the anomaly has been detected in the slave CPU 21A, the slave CPU 21A outputs a KILL signal K2 to the watchdog timer 14A. In this case, by the control of the watchdog timer 14A, the first system 10A enters the reset state. Further, by the reset signal R1 outputted from the watchdog timer 14A, the second system 20A itself also enters the reset state.

As described above, in the third embodiment, similarly to the case in the first embodiment, in case that any anomaly has been detected in either of the first system 10A and the second system 20A, the entire systems are rest, and there is no fear that the erroneous data is output to the field equipment 1 side. Therefore, precise failsafe can be executed in the entire systems. Further, since the entire systems are released from the reset state, the normal initialization after the release of reset can be realized.

In the third embodiment, the KILL signal K1 and the reset signal R2 may be omitted.

Such the constitution is applied to a case where it is thought that: when the anomaly of the second system 20A which is the slave side system is detected in the first system 10A which is the master side system, it is enough, without resetting the entire systems, that the first system 10A can notify the host system of the anomaly of the second system 20A and can cut off the data output to the field equipment 1 side.

In this case, in case that the watchdog timer 24A has detected the occurrence of the anomaly in the second system 20A, only the second system 20A is reset but the first system 10A is not reset. Therefore, processing using the first system 10A can be continued, and the notification for the host system is permitted. In this case, by processing of the master CPU 10A, the data output to the field equipment 1 side is off and the data output is obstructed.

Also under such the constitution, in case that the anomaly is produced in the first system 10A, the anomaly detection by the watchdog timer 14A or the anomaly detection by the second system 20A work effectively. In this case, the entire systems including the first system 10A are reset, and there is no fear that erroneous information is given to the field equipment 1 side. Accordingly, the precise failsafe can be executed in the entire systems.

### Fourth embodiment

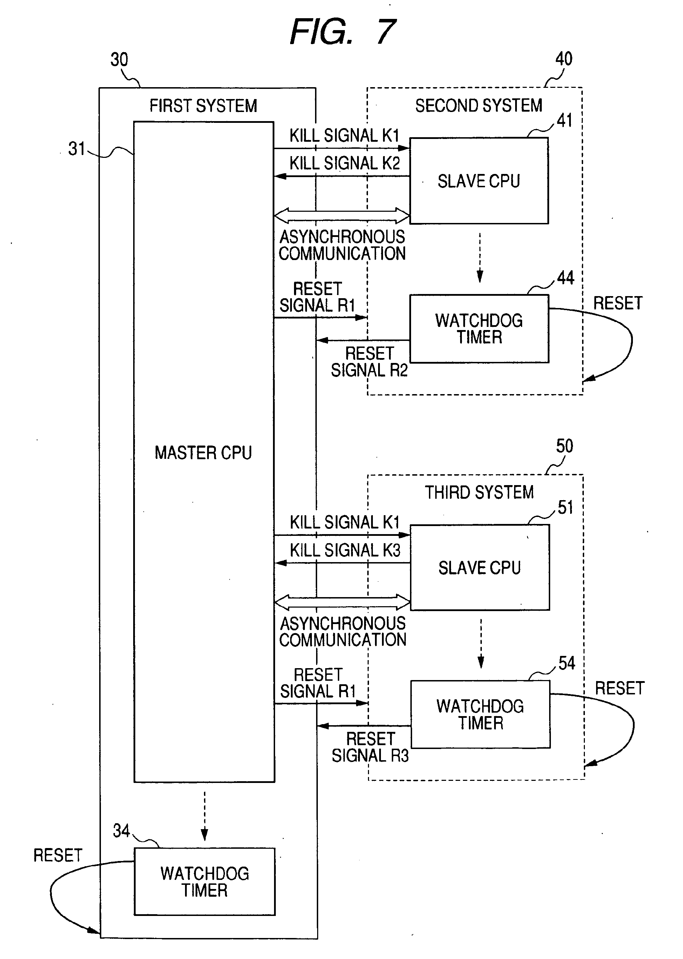

Fig. 7 is a block diagram showing a reset procedure in an information processing system in a fourth embodiment.

The information processing system in the fourth embodiment is composed of a first system 30, a second system 40, and a third system 50 which include their CPU's.

As shown in Fig. 7, the first system 30 includes a master CPU 31 and a watchdog timer 34. Further, the second system 40 includes a slave CPU 41 and a watchdog timer 44; and the third system 50 includes a slave CPU 51 and a watchdog timer 54.

In the fourth embodiment, the watchdog timer 34 in the first system 30 outputs a reset signal R1, and the reset signal R1 resets the second system 40 and the third system 50. The watchdog timer 44 in the second system 40 outputs a reset signal R2, and the reset signal R2 resets the first system 30. The watchdog timer 54 in the third system 50 outputs a reset signal R3, and the reset signal R3 resets the first system 30.

Further, the master CPU 31 in the first system 30 outputs a KILL signal K1, and the KILL signal K1 resets the second system 40 and the third system 50. The slave CPU 41 in the second system 40 outputs a KILL signal K2, and the KILL signal K2 resets the first system 30. The slave CPU 51 in the third system 50 outputs a KILL signal K3, and the KILL signal K3 resets the first system 30.

In the fourth embodiment, the first system 30 and the second system 40 monitor their anomalies mutually, and the first system 30 and the third system 50 monitor their anomalies mutually. Hereby, the occurrence of anomaly is surely detected. Thus, by adopting the mutual monitoring constitution between the master CPU and each slave CPU, without performing communication between the slave CPU's, anomaly in all the systems can be accurately detected. Accordingly, it is possible to avoid difficulty on mounting caused by the complicated communication.

In response to a property required for the information processing system, appropriately, the reset path by the reset signal or the IKLL signal may be omitted, or the reset function may be executed by other methods.

### Fifth embodiment

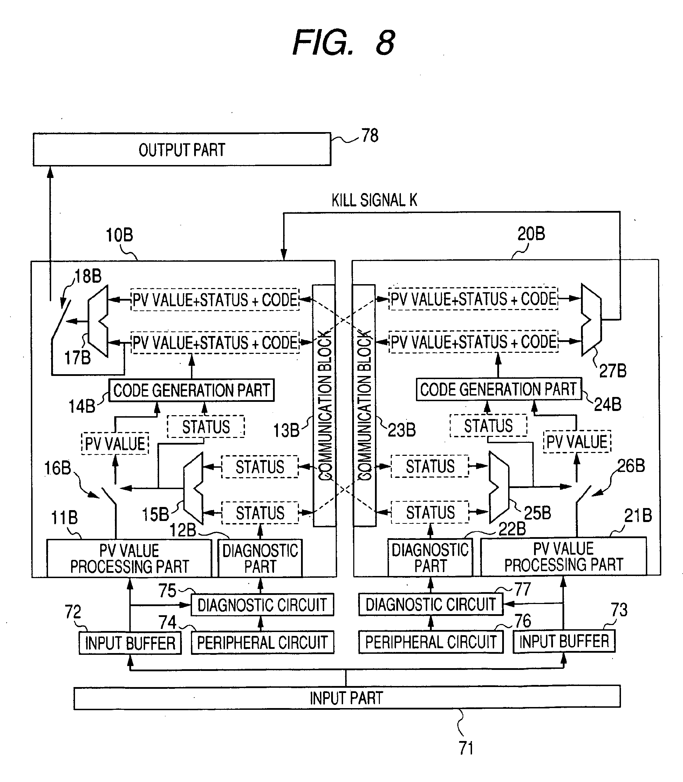

Fig. 8 is a block diagram showing a part of the constitution of an input/output unit to which an information processing system in a fifth embodiment is applied. The embodiment shows an example of a unit which processes an input value inputted from a field equipment 1 side in a downstream step and outputs a PV value (process value) to a controller 2 side in an upstream step.

As shown in Fig. 8, the input/output unit includes a master CPU 10B and a slave CPU 20B, and each of them executes the same processing independently. Further, the CPU 10B and the CPU 20B execute diagnostic of peripheral circuits mounted around their CPU' s respectively.

As shown in Fig. 8, an input value from the field equipment 1 is input through an input part 71 and an input buffer 72 to the master CPU 10B. A peripheral circuit 74 around the master CPU 10B is diagnosed by a diagnostic circuit 75. Further, a signal outputted from the input buffer 72 is input into the diagnostic circuit 75, and the presence and absence of anomaly in the signal is diagnosed. The presence and absence of anomaly in the peripheral circuit 74, and the presence and absence of anomaly in the signal outputted from the input buffer 72 are input to the master CPU 10B as diagnostic information from the diagnostic circuit 75.

Similarly, the same input value from the field equipment 1 is input through the input part 71 and an input buffer 73 into the slave CPU 20B. A peripheral circuit 76 around the slave CPU 20B is diagnosed by a diagnostic circuit 77. Further, a signal outputted from the input buffer 73 is input into the diagnostic circuit 77, and the presence and absence of anomaly in the signal is diagnosed. The presence and absence of anomaly in the peripheral circuit 76, and the presence and absence of anomaly in the signal outputted from the input buffer 73 are input to the slave CPU 20B as diagnostic information from the diagnostic circuit 77.

As shown in Fig. 8, the master CPU 10B includes a PV value processing part 11B which executes arithmetic processing for the value inputted through the input buffer 72 and converts the input value into a PV value (process value) of format which is processable in an upstream step on the controller 2 side, and a diagnostic part 12B which executes detection and judgment of anomaly upon reception of the diagnostic information from the diagnostic circuit 75 and generates a status that is a diagnostic result.

Further, the master CPU 10B includes a communication block 13B for executing communication with the slave CPU 20B, and a code generation part 14B which adds a CRC (Cyclic Redundancy Check) code and update counter to the PV value and the status.

Further, the slave CPU 20B includes a PV value processing part 21B which executes arithmetic processing for the value inputted through the input buffer 73 and converts the input value into a PV value (process value) of format which is processable in an upstream step on the controller 2 side, and a diagnostic part 22B which executes detection and judgment of anomaly upon reception of the diagnostic information from the diagnostic circuit 77 and generates a status that is a diagnostic result.

Further, the slave CPU 20B includes a communication block 23B for executing communication with the master CPU 10B, and a code generation part 24B which adds a CRC (Cyclic Redundancy Check) code and update counter to the PV value and the status.

Next, the operation of this unit will be described.

The master CPU 10B compares the status generated by the diagnostic part 12B with the status which is generated by the diagnostic part 24B in the slave CPU 20 and acquired through the communication by the communication block 23B and the communication block 13B in an equalization part 15B, and equalizes their statuses. The "equalization" is processing for equalizing the status treated in the master CPU 10B and the status treated in the slave CPU 20B. The equalization part 15B generates OR information of the status. Namely, the equalization part 15B, in case that either status indicates anomaly, changes the other status into a status which takes its anomaly, and delivers its changed status to the code generation part 14B. As described later, by performing the similar processing also in the slave CPU 20B, the status treated in the master CPU 10B and the status treated in the slave CPU 20B are equalized.

The PV value generated in the PV value processing part 11B is given to the code generation part 14B. However, in case that the anomaly of status has been detected on the basis of the processing in the equalization part 15B, the input of the PV value into the code generation part 14B is cut off by a cutoff part 16B.

The code generation part 14B generates a CRC code on the basis of the input PV value and the status generated by the equalization part 15B. Further, every time new PV value and status are input, the code generation part 14B updates the count number, and generates a code obtained by adding the updated count number to the CRC code. The code generation part 14B, by adding the thus generated code to the PV value and the status, generates a frame composed of the PV value, the status, the CRC code and the count number. The count number increases every time the PV value and the status are updated.

The frame similar to the frame created by the code generation part 14B is generated similarly by a code generation part 24B in the slave CPU 20B, and their frames are acquired through communication by the communication block 23B and the communication block 13B. The frame created by the code generation part 14B is collated with the frame created by the code generation part 24B by a comparison part 17B. In case that the comparison part 17B detects disagreement between the both frames, it judges the disagreement abnormal. As described later, by performing the similar processing in the slave CPU 20B, each of the master CPU 10B and the slave CPU 20B collates its own processing result with the other processing result, and judges the disagreement between their results abnormal. In case that all the processing in the master CPU 10B and the slave CPU 20B are normal, the collation by the comparison part 17B results in agreement between the both frames.

The frame generated by the code generation part 14B is output to an output part 78 in an upstream step. However, in case that the comparison part 17B detects the disagreement between the both frames and it is judged that anomaly is produced, a cutoff part 18B cuts off the output of the frame. Further, as described later, in case that the comparison part 27B in the slave CPU 20B detects the disagreement between the both frames, the output of the frame is obstructed by a KILL signal K.

On the other hand, the slave CPU 20B compares the status generated by the diagnostic part 22B with the status which is generated by the diagnostic part 14B in the master CPU 10 and acquired through the communication by the communication block 13B and the communication block 23B in an equalization part 25B, and equalizes their statuses. The equalization part 25B generates OR information of the status. Namely, the equalization part 25B, in case that either status indicates anomaly, changes the other status into a status which takes its anomaly, and delivers its status to the code generation part 24B.

A PV value generated in a PV value processing part 21B is given to the code generation part 24B. However, in case that the anomaly of status has been detected on the basis of the processing in the equalization part 25B, the input of the PV value into the code generation part 24B is cut off by a cutoff part 26B.

The code generation part 24B generates a CRC code on the basis of the input PV value and the status generated by the equalization part 25B. Further, every time new PV value and status are input, the code generation part 24B updates the count number, and generates a code obtained by adding the updated count number to the CRC code. The code generation part 24B, by adding the thus generated code to the PV value and the status, generates a frame composed of the PV value, the status, the CRC code and the count number. The count number increases every time the PV value and the status are updated.

The frame created by the code generation part 24B is collated by a comparison part 27B with the frame similarly created by the code generation part 14B in the master CPU 10B and acquired through the communication by the communication block 13B and the communication block 23B. In case that the comparison part 27B detects disagreement between the both frames, it judges the disagreement abnormal.

In case that the comparison part 27B detects the disagreement between the frames, the comparison part 27B outputs a KILL signal K, and gives the signal to the master CPU 10B. In this case, the master CPU 10B is forcedly reset by the KILL signal K, and the output of a new frame to the output part 78 is obstructed. Therefore, it is possible to prevent the erroneous data from being output to the output part 78.

In case that the output to the output part 78 is obstructed, count number updation is stopped. Therefore, in the upstream step of a later stage from the output part 78, by only referring to the count number, it can be recognized that output of information has been stopped.

As described above, in the fifth embodiment, in case that the comparison part 27B has detected the disagreement between the frames, the master CPU 10B is forcedly reset by the KILL signal K outputted from the comparison part 27B. In the fifth embodiment, in case that there is anomaly in processing of the master CPU 10B, the comparison part 27B detects the disagreement between the frames. Therefore, in the abnormal time of the master CPU 10B, the master CPU 10B is reset by the KILL signal K, so that there is no fear that the erroneous information is output to the host system. Accordingly, the system as a whole can execute the precise failsafe.

The range to which the present invention is applied is not limited to the above embodiments. Further, the invention can be widely applied to not only the safety system but also an information processing system which treats various information.

This application is based on Japanese Patent Application (No. 2005-016675) filed on January, 2005, the contents of which are herein incorporated by reference.

### Drawings

[Fig. 1(a)]
- a: First device
- b: Second device
- c: Reset
- 101: Anomaly detector
- 102: First device reset part
- 103: Second device reset part

[Fig. 1(b)]
- a: First device
- b: Second device
- c: Reset
- 111: Collating part
- 112: Reset part

[Fig. 1(c)]
- a: First device
- b: Second device
- c: Reset
- 121: Second device reset part
- 122: Anomaly recognition part
- 123: Informative part
- 124: First device reset part

[Fig. 2]
- 2: Controller
- 3: Input/output unit
- 5: Terminal board

[Fig. 3]
- a: Host system
- b: Reset
- c: Input value
- d: Operation clock
- e: Timer clear signal
- f: Asynchronous communication
- g: KILL signal K1
- h: KILL signal K2
- i: Reset signal R1
- j: Reset signal R2
- 10: First system
- 20: Second system
- 12, 22: Peripheral system
- 11: Master CPU
- 14, 24: Watchdog timer
- 21: Slave CPU

[Fig. 4]
- a: KILL signal K1
- b: KILL signal K2
- c: Reset signal R1
- d: Reset signal R2
- e: Asynchronous communication
- f: Reset
- 10: First system
- 11: Master CPU
- 14, 24: Watchdog timer
- 20: Second system
- 21: Slave CPU

[Fig. 5]
- a: Host system
- b: Reset
- c: Input value
- d: Operation clock
- e: Timer clear signal
- f: Asynchronous communication
- g: KILL signal K1
- h: KILL signal K2
- i: Reset signal R1
- j: Reset signal R2
- 10: First system
- 20: Second system
- 12, 22: Peripheral system
- 11: Master CPU
- 14, 24: Watchdog timer
- 21: Slave CPU

[Fig. 6]
- a: Host system
- b: Reset
- c: Operation clock
- d: Timer clear signal
- e: Asynchronous communication
- f: KILL signal K1
- g: KILL signal K2
- h: Reset signal R1
- i: Reset signal R2
- j: Output ON/OFF
- 10A: First system
- 20A: Second system
- 12A, 22A: Peripheral system
- 11A: Master CPU
- 14A, 24A: Watchdog timer
- 21A: Slave CPU

[Fig. 7]
- a: Reset
- b: Asynchronous communication
- c: KILL signal K1
- d: KILL signal K2
- e: KILL signal K3
- f: Reset signal R1
- g: Reset signal R2
- h: Reset signal R3
- 30: First system
- 31: Master CPU
- 34, 44, 54: Watchdog timer
- 40: Second system
- 41: Slave CPU
- 50: Third system
- 51: Slave CPU

[Fig. 8]
- a: KILL signal K
- b: PV value
- c: Status
- d: PV value + Status + Code
- 78: Output part
- 13B, 23B: Communication block
- 14B, 24B: Code generation part
- 11B, 21B: PV value processing part
- 12B, 22B: Diagnostic part
- 75, 77: Diagnostic circuit
- 74, 76: Peripheral circuit
- 72, 73: Input buffer
- 71: Input part

## Claims

1. An information processing system comprising:
a first device and a second device of which each executes the same processing independently;
an anomaly detector which detects anomaly of the first device; and
a second device reset part which resets the second device in case that the anomaly has been detected by the anomaly detector.

2. The information processing system according to Claim 1, comprising:
a first device reset part which resets the first device in case that the anomaly has been detected by the anomaly detector.

3. The information processing system according to Claim 1, wherein the anomaly detector is mounted separately from the first device.

4. The information processing system according to Claim 1, wherein the anomaly detector is mounted in the first device.

5. The information processing system according to Claim 1, wherein the anomaly detector is a watchdog timer.

6. An information processing system comprising:
a first device and a second device of which each executes the same processing independently,
wherein the first device includes a collating part which collates data generated by the first device with data generated by the second device and judges anomaly when these data are in disagreement with each other, and a reset part which resets the second device in case that the anomaly has been judged by the collating part.

7. An information processing system comprising:
a first device and a second device of which each executes the same processing independently,
wherein:
the second device includes a second device reset part which resets the second device in case that the second device reset part has detected anomaly of the second device; and
the first device includes an anomaly recognition part which recognizes anomaly of the second device, and an informative part which informs the anomaly of the second device recognized by the anomaly recognition part.

8. The information processing system according to Claim 7, wherein the second device includes a first device reset part which resets the first device in case that the first device reset part has detected anomaly of the first device.

9. The information processing system according to Claim 1, wherein the first device and the second device are separate semiconductor devices.

10. The information processing system according to Claim 6, wherein the first device and the second device are separate semiconductor devices.

11. The information processing system according to Claim 7, wherein the first device and the second device are separate semiconductor devices.

12. The information processing system according to Claim 1, wherein the first device and the second device are separate CPU's.

13. The information processing system according to Claim 6, wherein the first device and the second device are separate CPU's.

14. The information processing system according to Claim 7, wherein the first device and the second device are separate CPU's.

15. An information processing method which uses a first device and a second device of which each executes the same processing independently, comprising:
a step of detecting anomaly of the first device; and
a step of resetting the second device in case that the anomaly of the first device has been detected.

16. The information processing method according to Claim 15, comprising:
a step of resetting the first device in case that the anomaly of the first device has been detected.
